# EUROPEAN PATENT SPECIFICATION

(11) **EP 2 254 320 B1**
(45) Date of publication and mention of the grant of the patent: **04.10.2017**
(21) Application number: 09718419.6
(22) Date of filing: 02.03.2009
(51) Int. Cl.: H04M 11/00, H04L 12/66, H04M 15/00, H04L 29/06

(54) **COMMUNICATION CONTROL METHOD, GATEWAY DEVICE, RELAY SERVER, COMMUNICATION SYSTEM, AND RECORDING MEDIUM CONTAINING DEVICE PROGRAM**
KOMMUNIKATIONSSTEUERUNGSVERFAHREN, GATEWAYGERÄT, RELAISSERVER, KOMMUNIKATIONSSYSTEM UND AUFZEICNNUNGSMEDIUM MIT EINEM GERÄTEPROGRAMM
PROCÉDÉ DE COMMANDE DE COMMUNICATION, DISPOSITIF PASSERELLE, SERVEUR RELAIS, SYSTÈME DE COMMUNICATION ET SUPPORT D'ENREGISTREMENT CONTENANT UN PROGRAMME DE DISPOSITIF

(30) Priority: 05.03.2008 JP 2008055000
(43) Date of publication of application: 24.11.2010
(73) Proprietor: NEC Corporation, Minato-ku Tokyo 108-8001 (JP)
(72) Inventor: MABUCHI, Tsuyoshi, Tokyo 108-8001 (JP); KOMURA, Hajime, Tokyo 108-0073 (JP)
(74) Representative: Vossius & Partner Patentanwälte Rechtsanwälte mbB
(86) International application number: PCT/JP2009/053825
(87) International publication number: WO 2009/110411

(56) References cited:
- WO-A1-2004/036871
- JP-A- 2001 160 856
- JP-A- 2003 259 038
- JP-A- 2003 274 041
- US-A1- 2006 052 130
- US-A1- 2008 010 179
- GARCIA-MARTIN M ET AL: "Network Working Group Request for Comments: 3455 Category: Informational", HEISEI 15 NEN 1 GATSU 31 NICHI, [RETRIEVAL DATE HEISEI 21 NEN 5 GATSU 11 NICHI],, 1 January 2003 (2003-01-01), pages 2-34, XP008139971,
- 'Proceedings of the 2001 IEICE General Conference Tsushin 2, The Institute of Electronics, Information and Communication Engineers', 07 March 2001 article OISHI K. ET AL.: 'PSTN Setsuzoku o Koryo shita VoIP Service ni Okeru Kakin Seigyo no Kento', page 112, XP008139946
- GARCIA-MARTIN M. ET AL.: 'Network Working Group Request for Comments: 3455 Category: Informational' HEISEI 15 NEN 1 GATSU 31 NICHI, [RETRIEVAL DATE HEISEI 21 NEN 5 GATSU 11 NICHI], [Online] XP008139971 Retrieved from the Internet: <URL:http://tools.ietf.org/ html/rfc3455>

## Description

### [Technical Field]

The present invention relates to a communication control method, a gateway apparatus, a relay server, a communication system and a storage medium for storing program of an apparatus, which are applied to voice communication or the like between an IP (Internet Protocol) network and PSTN (Public Switched Telephone Network).

### [Background Art]

In recent years, there is a network system to provide voice communication on an IP network based on SIP (Session Initiation Protocol). Meanwhile, voice communication based on PSTN is also prevailing.

In the case of communication between networks whose protocols are different each other, communication is carried out via a gateway function such as MGCF (Media Gateway Control Function).

Our applicants propose that a voice communication gateway apparatus, which connects networks each other, includes a means, which transfers a voice packet directly to a voice data processing unit not via a processor unit for controlling a gateway, as a hardware unit different from the processor unit in order to improve process capability of the processor unit (for example, refer to patent document 1).

As a related art of the present invention, there is a system which includes a transmission apparatus to convert a signal with fixed bandwidth into a packet signal, a multiplexing apparatus to multiplex a plurality of user channel signals into the same packet, and a cross-connect apparatus to transfer the user channel signals to different paths through cross-connecting the user channel signals which are multiplexed in the same packet (for example, refer to patent document 2).
[Patent document 1] Japanese Patent Application Laid-Open No. 2003-78572
[Patent document 2] Japanese Patent Application Laid-Open No. 2005-244470
Prior art document US 2008/010179 A1 deals with a communication method via a gateway apparatus between networks whose protocols are different from each other, wherein charge identifying information is sent and received via said gateway apparatus which also converts the charge identifying information on the basis of a conversion database, associating charge identifying information on connection terminating network and charge identifying information on connection originating network.

Prior art document US 2006/052130 A1 deals with interworking architecture for facilitating dispatch communications by ensuring billing accuracy. The billing clearinghouse includes a settlement function that applies settlement logic to the collected data to perform reconciliation and create inter-carrier settlement invoices.

### [Description of the Invention]

### [Problem to be solved by the Invention]

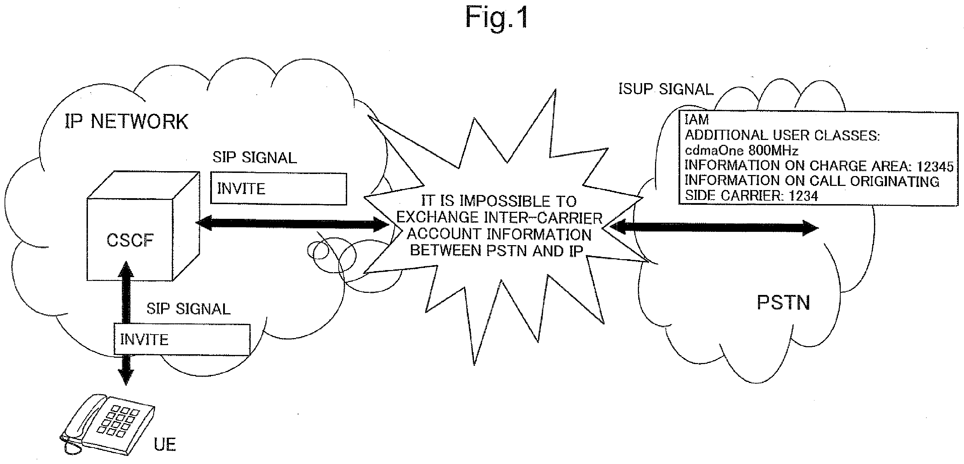

However, the additional user classes defined by the ISUP (ISDN user part) signal is different from the access type defined by the RFC (Request For Comment) standard document, that is, 3GPP (3rd Generation Partnership Project), 3GPP2 and TISPAN (Telecoms & Internet converged Services & Protocols for Advanced Networks). For this reason, it is not taken into consideration sufficiently that, with regard to exchange of information between the existing PSTN and the IP network as shown in Fig. 1, protocol headers of both networks are mapped in a manner of one to one correspondence.

For this reason, it is impossible to exchange information on account between a PSTN carrier and an IP carrier such as information to change a charge method per charge area and on the basis of a terminal, and therefore, it is difficult to carry out charge setting freely on the base of the individual account information.

While the art described in the patent document 1 mentioned above is to increase the channel capacity through improving process capability of the processor, it is not taken into consideration that the information on account can be exchanged between the PSTN carrier and the IP carrier, and then, it is not taken into consideration that the charge setting can be carried out freely on the base of the individual account information.

While the art described in the patent document 2 mentioned above is to reduce a cost burden due to holding both networks independently by accommodating conventional voice service, leased line service and ATM service to the data network, it is not taken into consideration that the information on account can be exchanged between the PSTN carrier and the IP carrier. Therefore, it is not taken into consideration that the charge setting can be carried out freely on the base of the individual account information.

The present invention is conceived in consideration of the situation mentioned above. An object of the present invention is to provide a communication control method, a gateway apparatus, a relay server, a communication system and a storage medium storing a program of an apparatus, which make it possible that network carrier carries out the charge setting freely on the basis of individual account information through enabling to exchange the account information between networks whose protocols are different each other.

### [Means for solving the Problem]

Several embodiments according to the present claims have the objective to solve the posed problem.

### [Effect of the Invention]

According to the present invention, it is possible to exchange the account information even between the networks whose protocols are different each other as mentioned above. For this reason, it is possible for each network carrier to carry out charge setting freely on the basis of the individual account information.

### [Best Mode for carrying out the Invention]

Next, an exemplary embodiment, to which a communication control method, a gateway apparatus, a relay server, a communication system and a program of an apparatus are applied according to the present invention, will be described in detail with reference to a drawing.

According to the exemplary embodiment of the present invention, the communication system enables to exchange the information on charge between an ISUP signal and a SIP signal through enabling to map inter-carrier account information (information on charge area, information on carrier, additional user classes or the like), which is based on the ISUP signal, to the P header (P-Charging-Vector header and P-Access-Network-Info header) which is based on the SIP signal and defined in RFC 3455.

First, an outline of the exemplary embodiment according to the present invention will be described in the following.

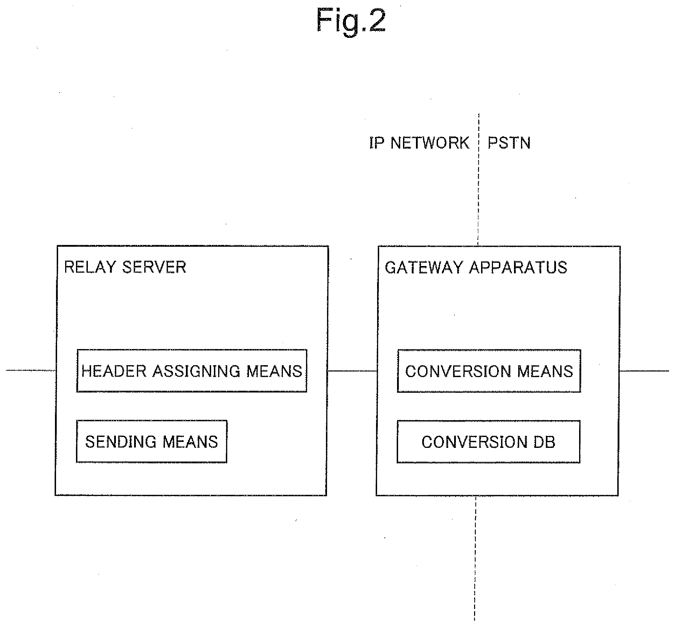

As shown in FIG. 2, the communication system has a configuration in which networks of the IP network to communicate on the basis of SIP and PSTN, whose protocols are different each other, are connected via the gateway apparatus, according to the exemplary embodiment of the present invention.

The gateway apparatus has a conversion database which associates charge identifying information on connection terminating network and charge identifying information on connection originating network each other in a manner of one to one correspondence, and stores the associated charge identifying information. Therefore, it is possible to convert the sent and received charge identifying information by the conversion means on the basis of the conversion database and to send the converted charge identifying information to the destination network.

The relay server has a header assigning means to assign an identification header including the charge identifying information on charge to a packet whose destination is a network based on different protocol. According to the above mention, it is possible that the header assigning means assigns the identification header to the packet whose destination is the network based on different protocol, such as PSTN, and afterward, the sending means sends the packet.

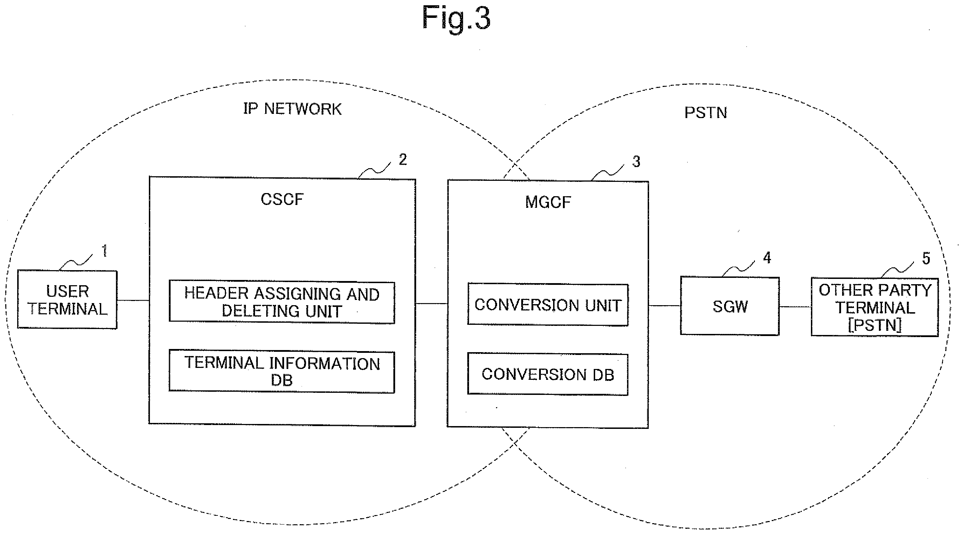

Next, a configuration will be described according to the exemplary embodiment of the present invention. FIG. 3 is a schematic diagram showing a system configuration according to the exemplary embodiment of the present invention.

As shown in FIG. 3, the communication system is configured so that an IP network in which a user terminal (UE; user equipment) 1 is connected to CSCF (Call session control function) 2 as the relay server based on SIP, and PSTN in which the other party terminal 5 is connected to SGW (Signaling Gateway) 4, un-illustrated MGW (Media Gateway) and an un-illustrated switching system, are connected each other via MGCF 3 as the gateway apparatus, according to the exemplary embodiment of the present invention.

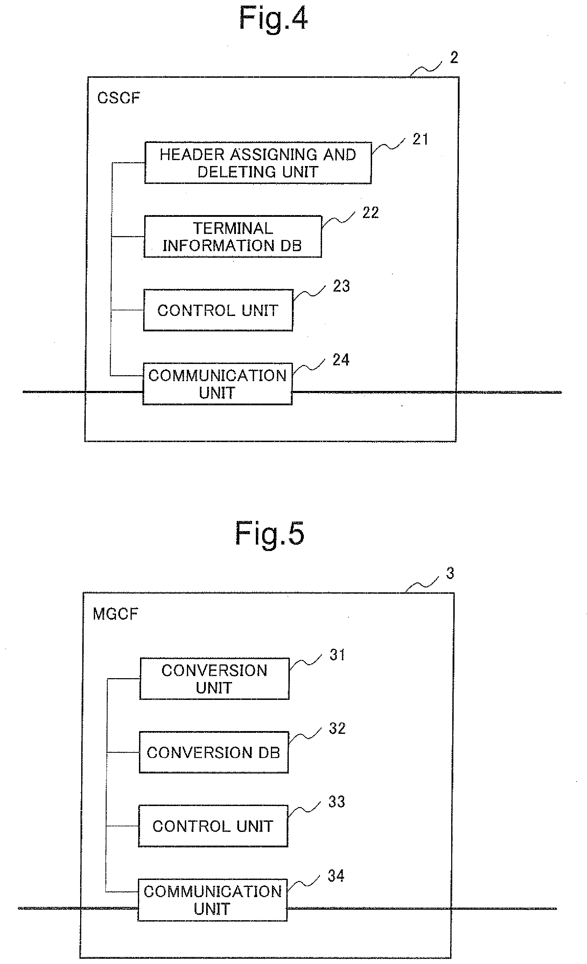

As shown in FIG. 4, CSCF 2 includes a header assigning and deleting unit 21 which assigns a predetermined header to a packet transferred to PSTN and deletes a predetermined header from a packet transferred to the user terminal 1, a terminal information DB (database) 22 which associates terminal classifying information with information on network, to which the terminal belongs, and stores the associated terminal classifying information with the information on network, a control unit 23 to control an operation of the whole apparatus and a communication unit 24 which is a communication IF (interface). The sending means mentioned above is realized by functions of the control unit 23 and the communication unit 24.

As shown in FIG. 5, MGCF 3 includes a conversion DB 32 which associates the charge identifying information embedded in the packet header of SIP and the charge identifying information in the signal of PSTN each other in a manner of one to one correspondence, and stores the associated charge identifying information. Furthermore, MGCF 3 includes a conversion unit 31 to convert the charge identifying information, which is sent and received between the networks whose protocols are different each other, on the basis of the conversion DB 32, a control unit 33 which controls an operation of the whole apparatus, and a communication unit 34 which is a communication IF.

If UE 1, which is the user terminal, is equipped with a communication function based on SIP such as a mobile phone, various telephones or the like, any type of UE 1 out of various terminal apparatuses may be applicable.

SGW 4 carries out controls by use of various control signals in PSTN.

An arbitrary telephone equipped with a telephone function in PSTN may be applicable as the other party terminal 5.

Next, an operation will be described according to the exemplary embodiment of the present invention.

First, an operation in which the P-Access-Network-Info header is used for sending the charge identifying information in SIP will be described in the following.

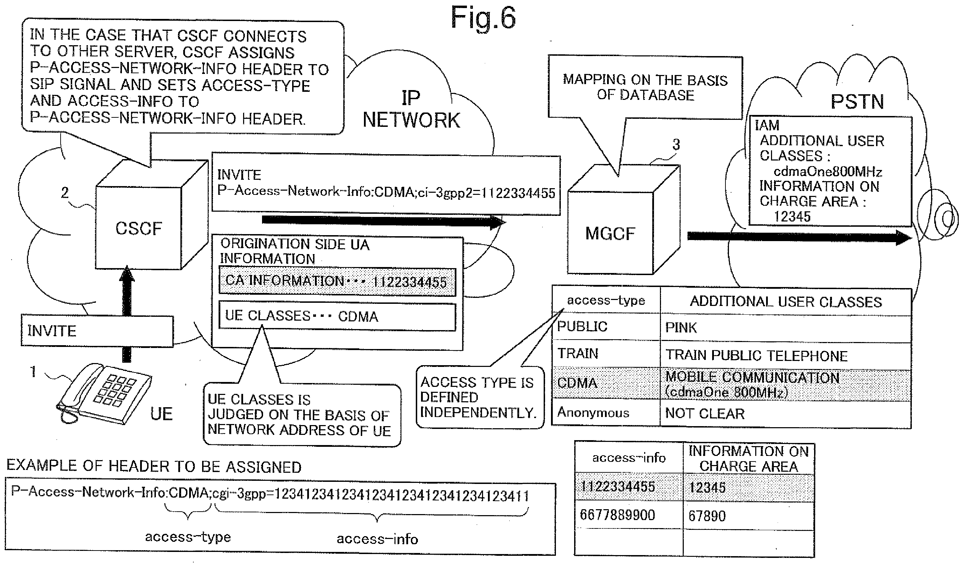

An operation executed at a time when a packet for call connection based on SIP is sent from UE 1, will be described with reference to FIG. 6 as an exemplified case that an INVITE signal is sent.

When a call is originated by UE 1, the INVITE signal is sent firstly to CSCF 2 from UE 1. In the case that the header assigning and deleting unit 21 of CSCF 2 judges that connection destination of the INVITE signal is a network whose protocol is different such as PSTN, the header assigning and deleting unit 21 assigns the P-Access-Network-Info header to the INVITE signal.

The P-Access-Network-Info header, which is assigned according to the exemplary embodiment of the present invention, includes the access-type and the access-info which are defined as the charge identifying information in advance.
One of various information such as an example shown in FIG. 6 may be applicable as Data structure of the P-Access-Network-Info header including the access-type and the access-info.

The access-type assigned according to the exemplary embodiment of the present invention means information which indicates terminal classes of UE 1, and the access-info means information on charge area.

As exemplified in FIG. 6, the terminal information DB 22 associates UA (user address) information with CA (call agent) information which indicates the charge area of UE and UE classes information which indicates the terminal classes of UE and stores the associated UA information, the CA information and the UE classes information.

The header assigning and deleting unit 21 extracts source address information from the packet header of INVITE signal and then, retrieves the terminal information DB 22 on the basis of the information on call originating network which is introduced from the source address information. According to the above mention, the header assigning and deleting unit 21 obtains the CA information and the UE classes information on call originating side UE 1 and generates the access-type and the access-info on the basis of the obtained information.

When MGCF 3 receives the INVITE signal to which CSCF 2 assigns the P-Access-Network-Info header, the conversion unit 31 of MGCF 3 converts the INVITE signal into an IAM signal, which is a control signal in PSTN, through mapping on the basis of the conversion DB 32, and sends the IAM signal.

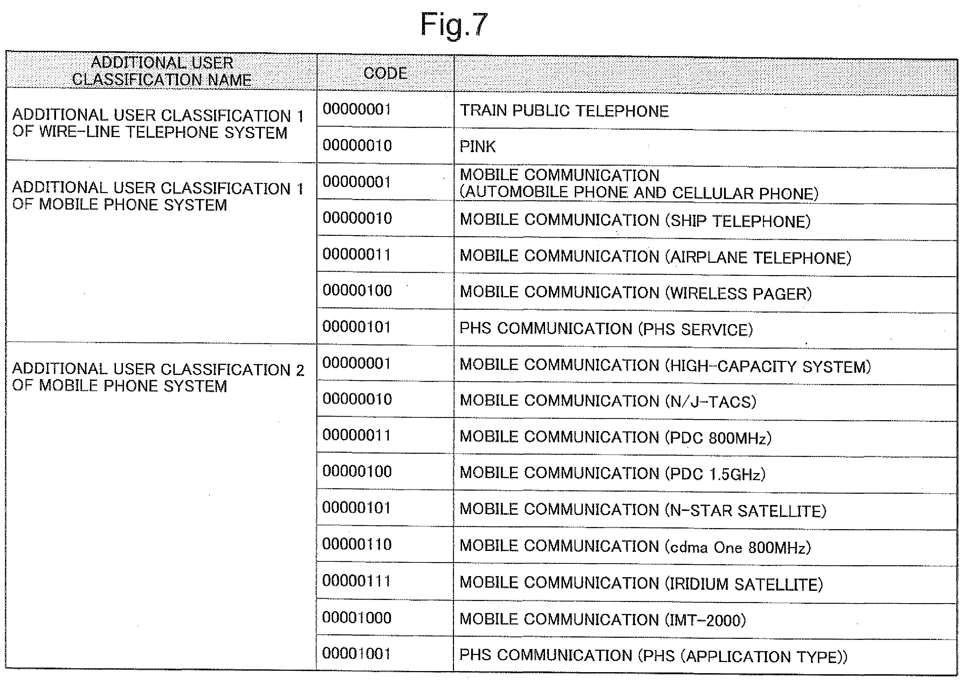

As exemplified in FIG. 6, the conversion DB 32 associates the charge identifying information which is embedded in the header information of SIP signal in the IP network such as the access-type, the access-info or the like, and the charge identifying information in PSTN such as the additional user classes, the information on charge area or the like each other in a manner of one to one correspondence, and stores the associated charge identifying information. For this reason, the access-type and the access-info, which are used in the exemplary embodiment of the present invention and which have one to one correspondence to the charge identifying information in PSTN, are assigned as the P-Access-Network-Info header. An example of the additional user classes in PSTN is shown in FIG 7.

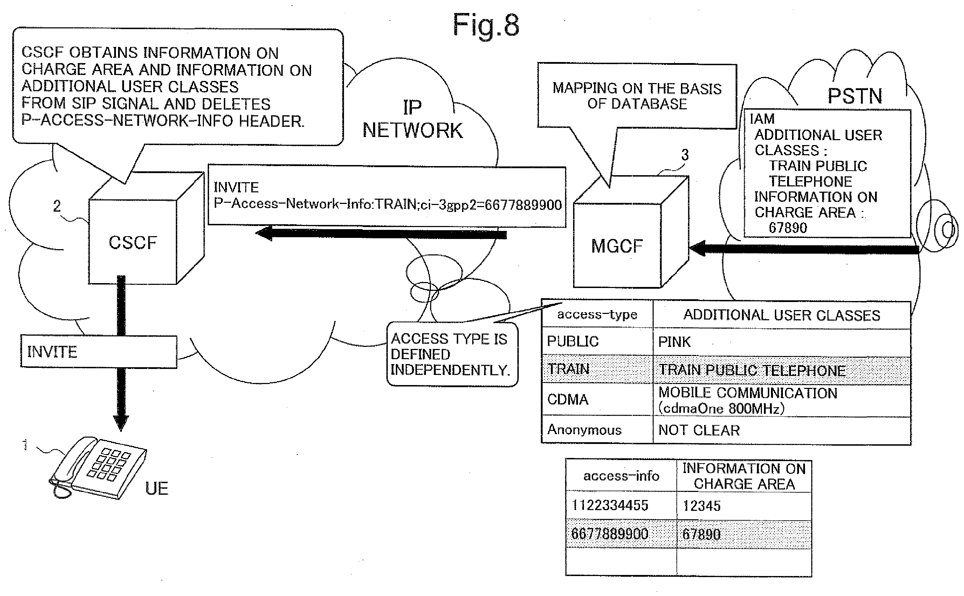

Next, an operation executed at a time when a control signal for call connection based on ISUP is sent from PSTN side, for example, from SGW 4, will be described with reference to FIG. 8 as an exemplified case that the IAM signal is sent.

When a call is originated by the other party terminal 5, the IAM signal is sent to MGCF 3 from PSTN. When MGCF 3 receives the IAM signal, whose destination is UE 1 in the IP network, from PSTN, the conversion unit 31 of MGCF 3 converts the IAM signal into the INVITE signal, to which the P-Access-Network-Info header including the access-type and the access-info is assigned, through mapping on the basis of the conversion DB 32 mentioned above, and MGCF 3 sends the INVITE signal to CSCF 2.

When CSCF 2 receives the converted INVITE signal whose destination is UE 1, CSCF 2 obtains the information on charge area and the information on additional user classes from the access-type and the access-info embedded in the P-Access-Network-Info header of the INVITE signal. When CSCF 2 obtains these information, the header assigning and deleting unit 21 of CSCF 2 deletes the P-Access-Network-Info header from the INVITE signal. CSCF 2 sends the INVITE signal, from which the header information is deleted as mentioned above, to UE 1.

Next, an operation in which the P-Charging-Vector header is used for sending the charge identifying information in SIP will be described.

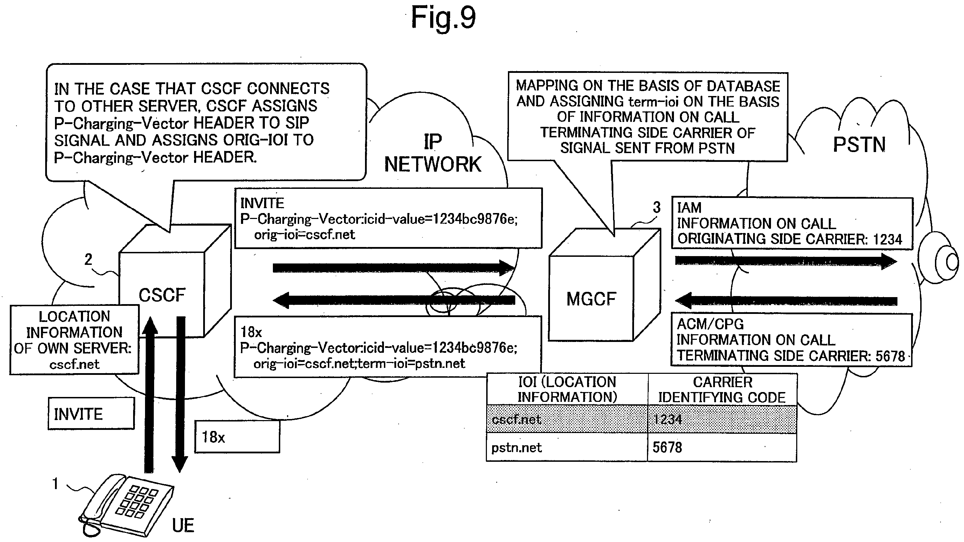

Hereinafter, an operation executed at a time when a packet for call connection based on SIP is sent from UE 1, will be described with reference to FIG. 9 as an exemplified case that the INVITE signal is sent.

When a call is originated by UE 1, the INVITE signal is sent firstly to CSCF 2 from UE 1. In the case that the header assigning and deleting unit 21 of CSCF 2 judges that connection destination of the INVITE signal is a network whose protocol is different such as PSTN, the header assigning and deleting unit 21 assigns the P-Charging-Vector header to the INVITE signal.

The header assigning and deleting unit 21 assigns the P-Charging-Vector header, which includes orig-ioi (Inter Operator Identifier) defined in advance, as the charge identifying information. The orig-ioi is defined as the information on call originating side carrier. In an example shown in FIG 9, the orig-ioi includes cscf.net as location information on CSCF 2.

One of various information such as an example shown in FIG. 9 may be applicable as data structure of the P-Charging-Vector header including the orig-ioi.

When MGCF 3 receives the INVITE signal to which CSCF 2 assigns the P-Charging-Vector header, the conversion unit 31 of MGCF 3 converts the INVITE signal into the IAM signal, which is a control signal of PSTN, through mapping on the basis of the conversion DB 32 and then, sends the IAM signal.

As exemplified in FIG 9, the conversion DB 32 associates a carrier identifying code in PSTN with ioi information such as the orig-ioi which is the information on call originating side carrier and the term-ioi which is the information on call terminating side carrier in a manner of one to one correspondence, and stores the associated carrier identifying code, the ioi information and the term-ioi. For this reason, the ioi information, which is used in the exemplary embodiment of the present invention and which has one to one correspondence to the charge identifying information in PSTN, is assigned as the P-Charging-Vector header.

When a control signal such as ACM and CPG is sent from PSTN in reply to the IAM signal, MGCF 3 converts the control signal into the 18x signal, to which the P-Charging-Vector header including the term-ioi of the information on call terminating side carrier in addition to the orig-ioi is assigned as the charge identifying information through mapping by use of the conversion unit 31 on the basis of the conversion database DB 32 and sends the 18x signal to CSCF 2.

According to the conversion, the carrier identifying code, which is included in the control signal sent from PSTN, is converted to the ioi information in a manner of one to one correspondence.

When CSCF 2 receives the converted 18x signal which should be transferred to UE 1, CSCF 2 obtains the information on call originating side carrier and the information on call terminating side carrier on the basis of the orig-ioi and the term-ioi embedded in the P-Charging-Vector header of the 18x signal. When the header assigning and deleting unit 21 obtains these information, the header assigning and deleting unit 21 deletes the P-Charging-Vector header from the 18x signal. CSCF 2 sends the 18x signal, from which the header information is deleted as mentioned above, to UE 1.

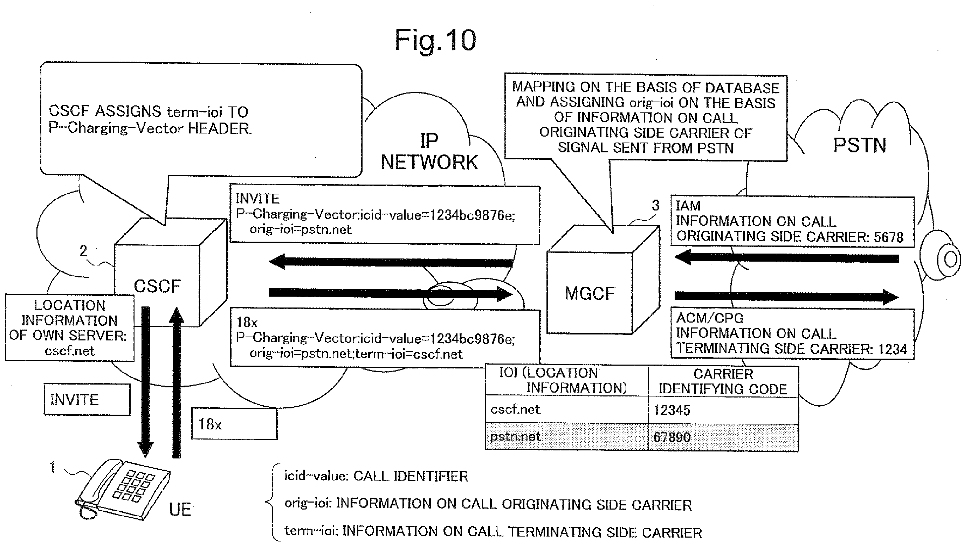

Next, an operation executed at a time when a control signal for call connection based on ISUP is sent from PSTN side, for example, from SGW 4, will be described with reference to FIG. 10 as an exemplified case that the IAM signal is sent.

When a call is originated by the other party terminal 5, the IAM signal is sent to MGCF 3 from PSTN. When MGCF 3 receives the IAM signal, which should be transferred to UE 1 in the IP network, from PSTN, the conversion unit 31 of MGCF 3 converts the IAM signal into the INVITE signal, to which the P-Charging-Vector header including the orig-ioi defined in advance is assigned, through mapping on the basis of the conversion DB 32 and then, MGCF 3 sends the INVITE signal to CSCF2. That is, the conversion unit 31 converts the IAM signal, which includes the carrier identifying code and based on ISUP, into the INVITE signal to which the P-Charging-Vector header including the orig-ioi is assigned.

When CSCF 2 receives the converted INVITE signal to be transferred to UE 1, CSCF 2 obtains the information on call originating side carrier on the basis of the orig-ioi embedded in the P-Charging-Vector header of the INVITE signal. When the header assigning and deleting unit 21 obtains these information as mentioned above, the header assigning and deleting unit 21 deletes the P-Charging-Vector header from the INVITE signal. CSCF 2 sends the INVITE signal, from which the header information is deleted as mentioned above, to UE 1.

When UE 1 receives the INVITE signal from PSTN, UE 1 sends the 18x signal to CSCF 2 in reply to the INVITE signal. In the case that the header assigning and deleting unit 21 of CSCF 2 judges that connection destination of the 18x signal is a network whose protocol is different such as PSTN, the header assigning and deleting unit 21 assigns the P-Charging-Vector header to the 18x signal.

The header assigning and deleting unit 21 assigns the P-Charging-Vector header, which includes the term-ioi defined in advance in addition to the orig-ioi, to the 18x signal. The orig-ioi is defined as the information on call originating side carrier and the term-ioi information is defined as the information on call terminating side carrier. According to an example shown in FIG 10, the term-ioi information includes cscf.net as location information on CSCF 2.

One of various information such as an example shown in FIG. 10 may be applicable as the data structure of the P-Charging-Vector header including the orig-ioi and the term-ioi.

When MGCF 3 receives the 18x signal, to which the P-Charging-Vector header is assigned, from CSCF 2, the conversion unit 31 of MGCF 3 converts the 18x signal into the ACM signal and the CPG signal, which are control signals in PSTN, through mapping on the basis of the conversion DB 32 mentioned above and then, MGCF 3 sends the ACM signal and the CPG signal to PSTN.

Fig. 11 is a sequence diagram showing a specific example of a call connection operation in the case that UE 1 originates a call to PSTN on the basis of SIP.

FIG. 12 is a sequence diagram showing a specific example of a call connection operation executed at a time when the other party terminal 5 in the PSTN side originates a call to UE 1, and consequently, a control signal for the call connection on the basis of ISUP is sent from the PSTN side, for example, from SGW 4.

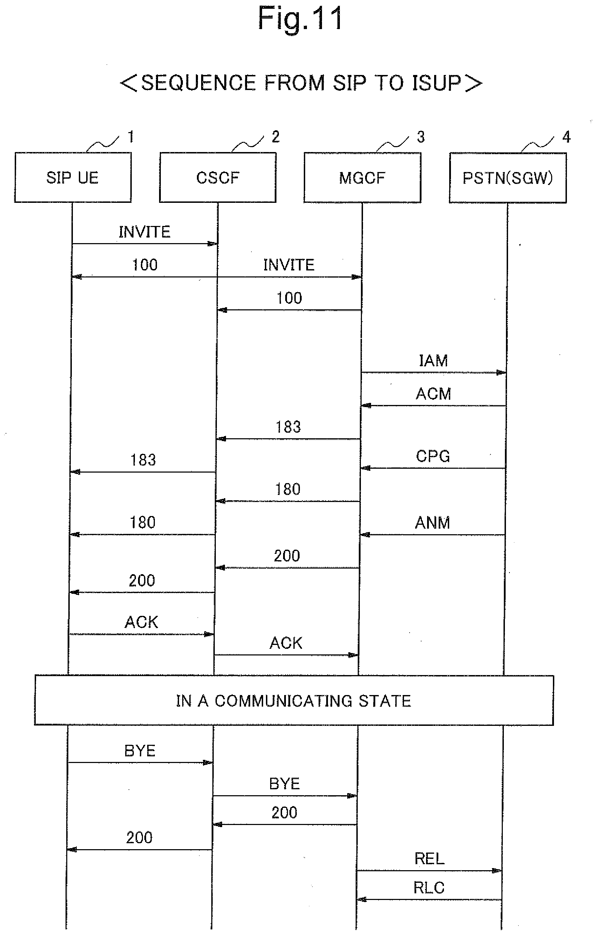

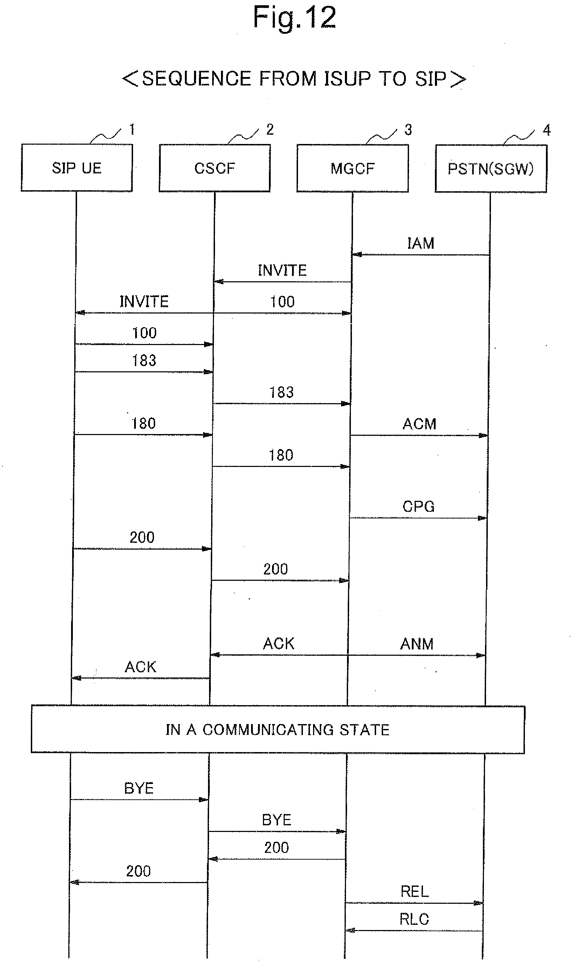

While the conversion between the INVITE signal and the IAM signal, and the conversion between the 18x signal, and the ACM signal and the CPG signal have been described in the above-mentioned example according to the exemplary embodiment of the present invention, the above-mentioned conversion operation is also executed for each control signal which is exchanged in the system as shown in FIG. 11 and FIG. 12 according to the exemplary embodiment of the present invention.

That is, when each control signal for the call connection is exchanged between the IP network based on SIP and PSTN, the above mentioned conversion of the charge identifying information is executed for each control signal which includes the charge identifying information.

As mentioned above, the charge identifying information based on SIP is assigned to each control signal by use of the P-Access-Network-Info header and the P-Charging-Vector header, and similarly, the charge identifying information based on ISUP is included in each control signal. When the charge identifying information on one network is sent to the other network as the control signal as mentioned above, the charge identifying information is converted by MGCF 3 as mentioned above.

As a result, exchange of the charge identifying information between the IP network based on SIP and PSTN is realized in a manner of one to one correspondence.

A number, which is denoted as the exchanged signal in FIG. 11 and FIG. 12, means a SIP response code and specifically, indicates the following.
100; Trying
180; Ringing
183; Session Progress
200; OK

As the ISUP message shown in FIG. 11 and FIG. 12, IAM (Initial Address Message) is a connection requesting signal which is a type of ISUP messages.

ACM (Address Complete Message) is a signal to notify that a path to the other communication party in a switching system is specified.

ANM (ANswer Message) is a signal to notify to be in a state that it is possible to communicate with the other communication party.

CPG (Call Progress) is a signal to inform a progress report such as being in a calling state.

REL (Release) is a signal to request release of a communication line.

RLC (Release Complete) is a signal to notify that the communication line is released.

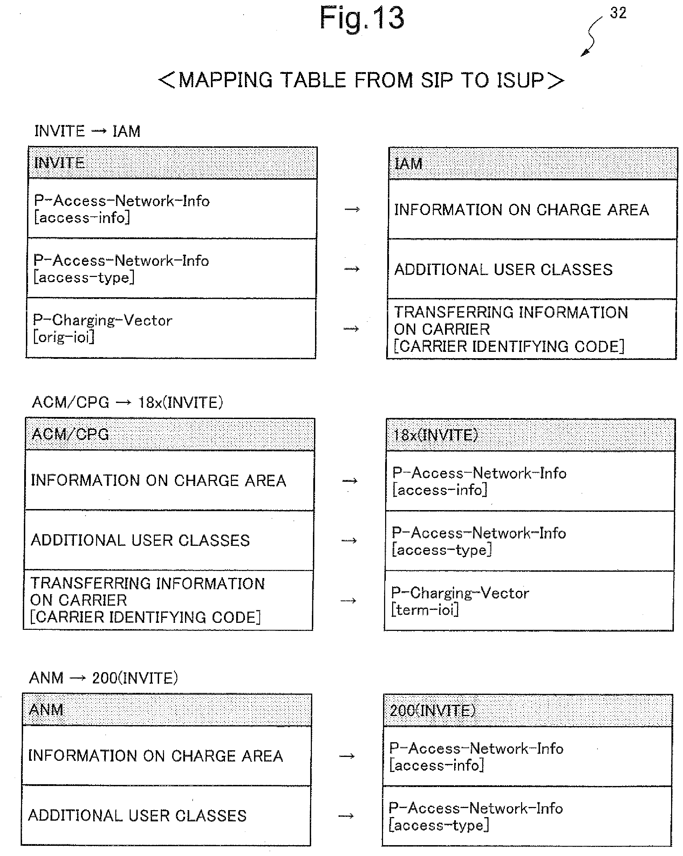

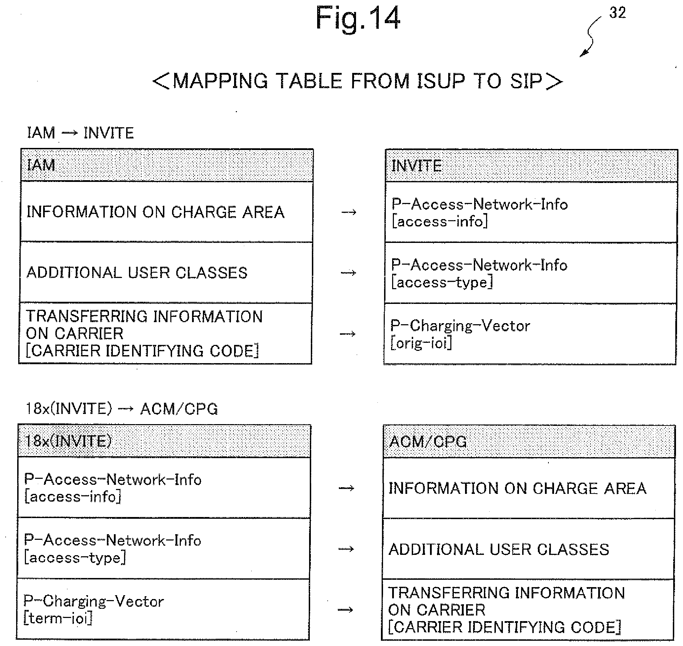

FIG. 13 shows an example of the conversion DB 32 which is used in the call connection in the case that UE1 originates a call to PSTN on the basis of SIP as shown in FIG. 11. FIG. 14 shows an example of the conversion DB 32 which is used in the call connection in the case that the control signal for the call connection based on ISUP is sent from the PSTN side, for example, from SGW 4 as shown in FIG. 12.

As mentioned above, the access-info and the access-type of P-Access-Network-Info header in SIP are associated with the charge area information and the additional user classes respectively, and stored in the conversion DB 32. Moreover, the ioi information of the P-Charging-Vector header is associated with the carrier identifying code and stored in the conversion DB 32.

As mentioned above, the conversion DB 32 associates the charge identifying information such as the access-info, the access-type and the ioi information in SIP, and the charge identifying information in ISUP each other in a manner of one to one correspondence, and stores the associated charge identifying information.

According to the exemplary embodiment of the present invention, it is possible to realize exchange of the charge identifying information between the IP network and PSTN with no necessity to add a function for encapsulation to each apparatus and to add a specific apparatus for the encapsulation and to change protocol for the encapsulation and furthermore with a simple process method through devising a method for utilizing a header field of protocol header as mentioned above.

That is, according to the exemplary embodiment of the present invention, it is possible to realize exchange between the charge identifying information in the IP network and the charge identifying information based on ISUP in PSTN easily not with necessity to install a special function to the apparatus in PSTN which is an existing network, but with necessity to install only the functions, which are described in the exemplary embodiment of the present invention, to the apparatus in the IP network.

Since it is possible to exchange the account information easily between the networks, whose protocols are different each other, such as the IP network and PSTN as mentioned above, it is possible to realize for each network carrier to set the charge system freely on the basis of the individual account information with a simple work.

Further, while each exemplary embodiment mentioned above is preferable one of the present invention, the present invention is not limited to the exemplary embodiment of the present invention. It is possible to modify the exemplary embodiment of the present invention on the basis of the scope of the present claims. For example, while the operations, in which the P-access-Network-Info header and the P-Charging-Vector header are used respectively as the charge identifying information in SIP, have been described separately, a packet based on SIP includes both headers may be applicable.

Moreover, it is possible to realize each function described in the exemplary embodiment of the present invention through making CPU of a computer, which composes the system, execute a program supplied by a storage medium which stores process procedure for realizing the gateway apparatus (MGCF), the relay server (CSCF) and the communication system based on the exemplary embodiment of the present invention mentioned above as the program.

In this case, the present invention applies to even a case that a group of information including the program is supplied to an output apparatus not only from the storage medium mentioned above but also from an external storage medium via a network.

That is, since a program code, which is read from the storage medium, realize the new function according to the present invention, the storage medium which stores the program code, and a signal which is read from the storage medium compose the present invention.

As the storage medium, for example, a flexible disc, a hard disk, an optical disc, a magneto-laser disk, CD-ROM, CD-R, CD-RW, DVD-ROM, DVD-RAM, DVD-RW, DVD+RW, a magnetic tape, a non-volatile memory card, ROM or the like may be applicable.

The storage medium, which stores the program according to the present invention, makes it possible that the gateway apparatus (MGCF), the relay server (CSCF) and the communication system, which the stored program controls, realize each function described in the exemplary embodiment of the present invention.

This application is based upon and claims the benefit of priority from Japanese Patent Application No. 2008-055000, filed on March 5, 2008, the disclosure of which is incorporated herein in its entirety by reference.

### [Brief Description of the Drawing]

FIG. 1 shows a problem of a general system in which PSTN and IP network are connected each other.
FIG. 2 is a schematic block diagram according to an exemplary embodiment of the present invention.
FIG. 3 is a schematic block diagram showing a system configuration according to the exemplary embodiment of the present invention.
FIG. 4 is a block diagram showing an exemplary configuration of CSCF 2.
FIG. 5 is a block diagram showing an exemplary configuration of MGCF 3.
FIG. 6 shows an example of operation executed at a time when a call is originated by UE 1 according to the exemplary embodiment of the present invention.
FIG. 7 shows an example of additional user classes in PSTN.
FIG. 8 shows an example of operation executed at a time when a call is originated from PSTN side according to the exemplary embodiment of the present invention.
FIG. 9 shows an example of operation executed at a time when a call is originated by UE 1 according to the exemplary embodiment of the present invention.
FIG. 10 shows an example of operation executed at a time when a call is originated from PSTN side according to the exemplary embodiment of the present invention:
   FIG.11 shows an example of call connection operation executed at a time when a call is originated by UE 1 according to the exemplary embodiment of the present invention.
   FIG. 12 shows an example of call connection operation executed at a time when a call is originated from PSTN side according to the exemplary embodiment of the present invention.
   FIG. 13 shows an example of a conversion DB 32 which is used in a call connection operation when a call is originated by UE 1.
   FIG. 14 shows an example of the conversion DB 32 which is used in a call connection operation when a call is originated from PSTN side.

### [Description of Code]

1 User terminal (UE)
2 CSCF (example of relay server)
3 MGCF (example of gateway apparatus)
4 SGW
5 Other party terminal.

## Claims

1. A communication control method for communication via a gateway apparatus (3) between a connection originating network and a connection terminating network, wherein the said gateway apparatus is connected to a relay server (2) present in the originating network, and wherein each of the protocols in the connection originating network and the connection terminating network is different from each other, said method being **characterized by**:
(a) associating, by the said gateway, charge identifying information, received via a call control signal sent from the said relay server, which includes at least a terminal class of a user terminal and a charge area defined in the connection originating network and charge identifying information which includes at least a terminal class of a user terminal and a charge area defined in the connection terminating network in a one to one correspondence, and storing said associated charge identifying information in a conversion database (32) of the gateway apparatus (3);
(b) converting, in said gateway apparatus (3), said charge identifying information included in a call control signal received from the relay server of the connection originating network to the corresponding charge identifying information of the connection terminating network on the basis of the conversion database (32);
(c) including, at the said gateway apparatus (3), the converted charge identifying information in a call control signal to be sent to the connection terminating network; and
(d) sending the call control signal to the connection terminating network from said gateway apparatus.

2. The communication control method according to claim 1, wherein said connection originating network includes a relay server (2) for relaying the call control signal in said connection originating network, said method further comprising the following steps:
(e) associating user address information with the charge area and the terminal class with respect to the user terminal (1) in the connection originating network and storing the associated user address information, the charge area and the terminal class in a terminal information database (22) of the relay server (2);
(f) extracting source user address information included in the call control signal received from the user terminal (1) of call origination, at the relay server (2), retrieving the terminal information database (22) and obtaining the charge area and the terminal class corresponding to the source user address information; and
(g) assigning the obtained charge area and the terminal class as the charge identifying information to the call control signal and transmitting to the gateway apparatus (3).

3. The communication control method according to claim 1 or claim 2, wherein said charge identifying information further includes information on carrier, said method further comprising the following steps:
(h) associating the information on carrier defined in the connection originating network and the information on carrier defined in the connection terminating network in a one to one correspondence, and storing said associated charge identifying information in the conversion database (32);
(i) converting, in said gateway apparatus (3), information on connection originating side carrier included in the call control signal received from the connection originating network to the corresponding information on carrier defined in the connection terminating network on the basis of the conversion database (32);
(j) including, at the gateway apparatus (3), the converted information on connection originating side carrier in the call control signal to be sent to the connection terminating network; and
(k) sending the call control signal to the connection terminating network from said gateway apparatus (3).

4. The communication control method according to claim 3, further comprising the following steps:
(1) converting, in said gateway apparatus (3), information on connection terminating side carrier included in a call control response signal received from the connection terminating network to the corresponding information on carrier defined in the connection originating network on the basis of the conversion database (32);
(m) including, at the gateway apparatus (3), the converted information on connection terminating side carrier in a call control response signal to be sent to the connection originating network; and
(n) sending the call control response signal to the connection originating network from said gateway apparatus (3).

5. A gateway apparatus (3) provided between a connection originating network and a connection terminating network, wherein each of the protocols in the connection originating network and the connection terminating network is different from each other, said gateway apparatus being connected to a relay server (2) of the connection originating network, and being **characterized by**:
(a) a conversion database (32) which is configured to associate charge identifying information received from the said relay server which includes at least a terminal class of a user terminal and a charge area defined in the connection originating network and charge identifying information which includes at least a terminal class of a user terminal and a charge area defined in the connection terminating network with each other in a one to one correspondence, and to store said associated charge identifying information;
(b) a conversion unit (31) which is configured to convert said charge identifying information included in a call control signal received from the connection originating network to the corresponding charge identifying information of the connection terminating network on the basis of said conversion database (32); and
(c) a communication control means (33, 34) which is configured to include the converted charge identifying information in a call control signal to be sent to the connection terminating network, and to send the call control signal to the connection terminating network.

6. The gateway apparatus according to claim 5, wherein said charge identifying information further includes information on carrier,
(d) wherein said conversion database (32) is further configured to associate the information on carrier defined in the connection originating network and the information on carrier defined in the connection terminating network in a one to one correspondence,
(e) wherein said conversion unit (31) is further configured to convert information on connection originating side carrier included in the call control signal received from the connection originating network to the corresponding information on carrier defined in the connection terminating network on the basis of the conversion database (32), and
(f) wherein said communication control means (33, 34) is further configured to include the converted information on carrier in the call control signal to be sent to the connection terminating network, and to send the call control signal to the connection terminating network.

7. The gateway apparatus according to claim 6,
(g) wherein said conversion unit (31) is further configured to convert information on connection terminating side carrier included in a call control response signal received from the connection terminating network to the corresponding information on carrier defined in the connection originating network on the basis of the conversion database (32), and
(h) wherein said communication control means (33, 34) is further configured to include the converted information on carrier in a call control response signal to be sent to the connection originating network, and to send the call control response signal to the connection originating network.

8. A relay server (2) provided in a connection originating network for relaying a call control signal in the connection originating network towards a gateway apparatus (3) residing between the connection originating network and a connection terminating network, said relay server being **characterized by**:
(a) a terminal information database (22) which is configured to associate user address information with a charge area and a terminal class with respect to a user terminal (1) in the connection originating network, and to store the associated user address information, the charge area and the terminal class;
(b) a header assigning means (21) which is configured to retrieve the terminal information database (22) based on source user address information included in the call control signal received from the user terminal (1) of call origination when the destination of the call control signal is a network based on different protocol via the gateway apparatus (3), and to assign an identification header, which includes the retrieved charge area and the terminal class as charge identifying information on charge, to the call control signal; and
(c) a sending means (24) to send the call control signal, in which said identification header is assigned, to the gateway apparatus (3),
(d) wherein the charge identifying information included in said identification header of the call control signal is converted to corresponding charge identifying information defined in the destination network of the call control signal by the gateway apparatus (3).

9. The relay server according to claim 8, wherein said header assigning means (21) is configured to assign another identification header which includes information on connection originating side carrier, and the information on connection originating side carrier is converted to corresponding information on carrier defined in the destination network of the call control signal by the gateway apparatus.

10. A storage medium to store a program of a gateway apparatus (3), which is provided between a connection originating network and a connection terminating network, wherein each of protocols in the connection originating network and the connection terminating network is different from each other, and includes a conversion database (32) which is configured to associate charge identifying information which includes at least a terminal class of a user terminal and a charge area defined in the connection originating network and charge identifying information which includes at least a terminal class of a user terminal and a charge area defined in the connection terminating network with each other in a one to one correspondence, and storing said associated charge identifying information, **characterized in that**:
said program causes a computer of said gateway apparatus (3) to execute
a conversion process to convert said charge identifying information included in a call control signal received from the connection originating network to the corresponding charge identifying information of the connection terminating network on the basis of said conversion database; and
a communication control process to include the converted charge identifying information in a call control signal to be sent to the connection terminating network, and to send the call control signal to the connection terminating network.

11. A communication system in which a first originating network including a relay server (2) according to claim 8 or 9 and a second terminating network whose protocol is different from said first network are connected to each other via a gateway apparatus (3) according to any one of claims 5 to 7.

## Patentansprüche

1. Kommunikationssteuerungsverfahren für eine Kommunikation über eine Gatewayvorrichtung (3) zwischen einem verbindungsaufbauseitigen Netzwerk und einem verbindungszielseitigen Netzwerk, wobei die Gatewayvorrichtung mit einem im verbindungsaufbauseitigen Netzwerk angeordneten Relaisserver (2) verbunden ist, und wobei die Protokolle im verbindungsaufbauseitigen Netzwerk und im verbindungszielseitigen Netzwerk sich jeweils voneinander unterscheiden, wobei das Verfahren **gekennzeichnet ist durch**:
(a) Zuordnen von Gebührenidentifizierungsinformation, die über ein vom Relaisserver übertragenes Rufsteuerungssignal empfangen wird, die mindestens eine Endgerätklasse eines Benutzerendgeräts und einen Gebührenbereich enthält, die im verbindungsaufbauseitigen Netzwerk definiert sind, und Gebührenidentifizierungsinformation, die mindestens eine Endgerätklasse eines Benutzerendgeräts und einen Gebührenbereich enthält, die im verbindungszielseitigen Netzwerk definiert sind, in einer eineindeutigen Beziehung durch die Gatewayvorrichtung und Speichern der zugeordneten Gebührenidentifizierungsinformation in einer Umwandlungsdatenbank (32) der Gatewayvorrichtung (3);
(b) Umwandeln der Gebührenidentifizierungsinformation, die in dem vom Relaisserver des verbindungsaufbauseitigen Netzwerks enthaltenen Rufsteuerungssignal enthalten ist, in die entsprechende Gebührenidentifizierungsinformation des verbindungszielseitigen Netzwerks auf der Basis der Umwandlungsdatenbank (32) in der Gatewayvorrichtung (3);
(c) Einfügen der umgewandelten Gebührenidentifizierungsinformation in ein an das verbindungszielseitige Netzwerk zu übertragendes Rufsteuerungssignal **durch** die Gatewayvorrichtung (3); und
(d) Übertragen des Rufsteuerungssignals von der Gatewayvorrichtung an das verbindungszielseitige Netzwerk.

2. Verfahren nach Anspruch 1, wobei das verbindungsaufbauseitige Netzwerk einen Relaisserver (2) zum Weiterleiten des Rufsteuerungssignals im verbindungsaufbauseitigen Netzwerk aufweist, wobei das Verfahren die folgenden Schritte aufweist:
(e) Verknüpfen von Benutzeradresseninformation mit dem Gebührenbereich und der Endgerätklasse bezüglich des Benutzerendgeräts (1) im verbindungsaufbauseitigen Netzwerk und Speichern der verknüpften Benutzeradresseninformation, des Gebührenbereichs und der Endgerätklasse in einer Endgerätinformationsdatenbank (22) des Relaisservers (2);
(f) Extrahieren von Quellbenutzeradresseninformation, die in dem vom rufaufbauenden Benutzerendgerät (1) empfangenen Rufsteuerungssignal enthalten ist, am Relaisserver (2), Abfragen der Endgerätinformationsdatenbank (22) und Erhalten des Gebührenbereichs und der Endgerätklasse, die der Quellbenutzeradresseninformation entsprechen; und
(g) Zuweisen des erhaltenen Gebührenbereichs und der Endgerätklasse als die Gebührenidentifizierungsinformation zum Rufsteuerungssignal und Übertragen des Rufsteuerungssignals zur Gatewayvorrichtung (3).

3. Verfahren nach Anspruch 1 oder 2, wobei die Gebührenidentifizierungsinformation ferner Information über einen Träger enthält, wobei das Verfahren ferner die folgenden Schritte aufweist:
(h) Zuordnen der Information über den im verbindungsaufbauseitigen Netzwerk definierten Träger und Information über den im verbindungszielseitigen Netzwerk definierten Träger in einer eineindeutigen Beziehung und Speichern der zugeordneten Gebührenidentifizierungsinformation in der Umwandlungsdatenbank (32);
(i) Umwandeln von Information über einen verbindungsaufbauseitigen Träger, die in dem vom verbindungsaufbauseitigen Netzwerk empfangenen Rufsteuerungssignal enthalten ist, in entsprechende Information über einen im verbindungszielseitigen Netzwerk definierten Träger auf der Basis der Umwandlungsdatenbank (32) in der Gatewayvorrichtung (3);
(j) Einfügen der umgewandelten Information über den verbindungsaufbauseitigen Träger in das an das verbindungszielseitige Netzwerk zu übertragende Rufsteuerungssignal an der Gatewayvorrichtung (3); und
(k) Übertragen des Rufsteuerungssignals von der Gatewayvorrichtung (3) an das verbindungszielseitige Netzwerk.

4. Verfahren nach Anspruch 3, ferner mit den folgenden Schritten:
(l) Umwandeln von Information über einen verbindungszielseitigen Träger, der in einem vom verbindungszielseitigen Netzwerk empfangenen Rufsteuerungsantwortsignal enthalten ist, in entsprechende Information über einen im verbindungsaufbauseitigen Netzwerk definierten Träger auf der Basis der Umwandlungsdatenbank an der Gatewayvorrichtung (3);
(m) Einfügen der umgewandelten Information über den verbindungszielseitigen Träger in ein an das verbindungsaufbauseitige Netzwerk zu übertragendes Rufsteuerungsantwortsignal an der Gatewayvorrichtung (3); und
(n) Übertragen des Rufsteuerungsantwortsignals von der Gatewayvorrichtung (3) an das verbindungsaufbauseitige Netzwerk.

5. Gatewayvorrichtung (3), die zwischen einem verbindungsaufbauseitigen Netzwerk und einem verbindungszielseitigen Netzwerk angeordnet ist, wobei die Protokolle im verbindungsaufbauseitigen Netzwerk und im verbindungszielseitigen Netzwerk jeweils voneinander verschieden sind, wobei die Gatewayvorrichtung mit einem Relaisserver (2) des verbindungsaufbauseitigen Netzwerks verbunden ist und **gekennzeichnet ist durch**:
(a) eine Umwandlungsdatenbank (32), die dafür konfiguriert ist, Gebührenidentifizierungsinformation, die vom Relaisserver empfangen wird und mindestens eine Endgerätklasse eines Benutzerendgeräts und einen Gebührenbereich enthält, die im verbindungsaufbauseitigen Netzwerk definiert sind, und Gebührenidentifizierungsinformation, die mindestens eine Endgerätklasse eines Benutzerendgeräts und einen Gebührenbereich enthält, die im verbindungszielseitigen Netzwerk definiert sind, in einer eineindeutigen Beziehung einander zuzuordnen und die zugeordnete Gebührenidentifizierungsinformation zu speichern;
(b) eine Umwandlungseinheit (31), die dafür konfiguriert ist, die Gebührenidentifizierungsinformation, die in einem vom verbindungsaufbauseitigen Netzwerk empfangenen Rufsteuerungssignal enthalten ist, auf der Basis der Umwandlungsdatenbank (32) in die entsprechende Gebührenidentifizierungsinformation des verbindungszielseitigen Netzwerks umzuwandeln; und
(c) eine Kommunikationssteuerungseinrichtung (33, 34), die dafür konfiguriert ist, die umgewandelte Gebührenidentifizierungsinformation in ein an das verbindungszielseitige Netzwerk zu übertragendes Rufsteuerungssignal einzufügen und das Rufsteuerungssignal an das verbindungszielseitige Netzwerk zu übertragen.

6. Gatewayvorrichtung nach Anspruch 5, wobei die Gebührenidentifizierungsinformation ferner Information über einen Träger enthält,
(d) wobei die Umwandlungsdatenbank (32) ferner dafür konfiguriert ist, die Information über den im verbindungsaufbauseitigen Netzwerk definierten Träger und die Information über den im verbindungszielseitigen Netzwerk definierten Träger in einer eineindeutigen Beziehung zuzuordnen,
(e) wobei die Umwandlungseinheit (31) ferner dafür konfiguriert ist, Information über den verbindungsaufbauseitigen Träger, die im vom verbindungsaufbauseitigen Netzwerk empfangenen Rufsteuerungssignal enthalten ist, basierend auf der Umwandlungsdatenbank (32) in entsprechende Information über einen im verbindungszielseitigen Netzwerk definierten Träger umzuwandeln, und
(f) wobei die Kommunikationssteuerungseinrichtung (33, 34) ferner dafür konfiguriert ist, die umgewandelte Information über den Träger in das an das verbindungszielseitige Netzwerk zu übertragende Rufsteuerungssignal einzufügen und das Rufsteuerungssignal an das verbindungszielseitige Netzwerk zu übertragen.

7. Gatewayvorrichtung nach Anspruch 6,
(g) wobei die Umwandlungseinheit (31) ferner dafür konfiguriert ist, Information über einen verbindungsaufbauseitigen Träger, der in einem vom verbindungszielseitigen Netzwerk empfangenen Rufsteuerungsantwortsignal enthalten ist, basierend auf der Umwandlungsdatenbank (32) in die entsprechende Information über einen im verbindungsaufbauseitigen Netzwerk definierten Träger umzuwandeln, und
(h) wobei die Kommunikationssteuerungseinrichtung (33, 34) ferner dafür konfiguriert ist, die umgewandelte Information über einen Träger in ein an das verbindungsaufbauseitige Netzwerk zu übertragendes Rufsteuerungsantwortsignal einzufügen und das Rufsteuerungsantwortsignal an das verbindungsaufbauseitige Netzwerk zu übertragen.

8. Relaisserver (2), der in einem verbindungsaufbauseitigen Netzwerk angeordnet ist, zum Weiterleiten eines Rufsteuerungssignals im verbindungsaufbauseitigen Netzwerk zur Gatewayvorrichtung (3), die zwischen dem verbindungsaufbauseitigen Netzwerk und einem verbindungszielseitigen Netzwerk angeordnet ist, wobei der Relaisserver **gekennzeichnet ist durch**:
(a) eine Endgerätinformationsdatenbank (22), die dafür konfiguriert ist, Benutzeradresseninformation mit einem Gebührenbereich und einer Endgerätklasse bezüglich eines Benutzerendgeräts (1) im verbindungsaufbauseitigen Netzwerk zu verknüpfen und die verknüpfte Benutzeradresseninformation, den Gebührenbereich und die Endgerätklasse zu speichern;
(b) eine Header-Zuweisungseinrichtung (21), die dafür konfiguriert ist, die Endgerätinformationsdatenbank (22) basierend auf einer Quellenbenutzeradresseninformation, die in dem vom rufaufbauenden Benutzerendgerät (1) empfangenen Rufsteuerungssignal enthalten ist, wenn das Ziel des Rufsteuerungssignals ein auf einem anderen Protokoll basierendes Netzwerk ist, über die Gatewayvorrichtung (3) abzufragen und einen Identifizierungs-Header, der den abgerufenen Gebührenbereich und die Endgerätklasse als Gebührenidentifizierungsinformation über Gebühren enthält, dem Rufsteuerungssignal zuzuweisen; und
(c) eine Übertragungseinrichtung (24) zum Übertragen des Rufsteuerungssignals, dem der Identifizierungs-Header zugewiesen ist, an die Gatewayvorrichtung (3),
(d) wobei die im Identifizierungs-Header des Rufsteuerungssignals enthaltene Gebührenidentifizierungsinformation **durch** die Gatewayvorrichtung (3) in entsprechende Gebührenidentifizierungsinformation umgewandelt wird, die im verbindungszielseitigen Netzwerk des Anrufsteuerungssignals definiert ist.

9. Relaisserver nach Anspruch 8, wobei die Header-Zuweisungseinrichtung (21) dafür konfiguriert ist, einen anderen Identifizierungs-Header zuzuweisen, der Information über einen verbindungsaufbauseitigen Träger enthält, wobei die Information über einen verbindungsaufbauseitigen Träger durch die Gatewayvorrichtung in entsprechende Information über einen Träger umgewandelt wird, der im verbindungszielseitigen Netzwerk des Rufsteuerungssignals definiert ist.

10. Speichermedium zum Speichern eines Programms einer Gatewayvorrichtung (3), die zwischen einem verbindungsaufbauseitigen Netzwerk und einem verbindungszielseitigen Netzwerk angeordnet ist, wobei die Protokolle im verbindungsaufbauseitigen Netzwerk und im verbindungszielseitigen Netzwerk jeweils voneinander verschieden sind, und eine Umwandlungsdatenbank (32) aufweist, die dafür konfiguriert ist, Gebührenidentifizierungsinformation, die mindestens eine Endgerätklasse eines Benutzerendgeräts und einen Gebührenbereich enthält, die im verbindungsaufbauseitigen Netzwerk definiert sind, und Gebührenidentifizierungsinformation, die mindestens eine Endgerätklasse eines Benutzerendgeräts und einen Gebührenbereich enthält, die im verbindungszielseitigen Netzwerk definiert sind, in einer eineindeutigen Beziehung einander zuzuordnen und die zugeordnete Gebührenidentifizierungsinformation zu speichern;
**dadurch gekennzeichnet dass**
das Programm einen Computer der Gatewayvorrichtung (3) veranlasst, auszuführen:
einen Umwandlungsprozess zum Umwandeln der Gebührenidentifizierungsinformation, die in einem vom verbindungsaufbauseitigen Netzwerk empfangenen Rufsteuerungssignal enthalten ist, in entsprechende Gebührenidentifizierungsinformation des verbindungszielseitigen Netzwerks auf der Basis der Umwandlungsdatenbank; und
einen Kommunikationssteuerungsprozess zum Einfügen der umgewandelten Gebührenidentifizierungsinformation in ein an das verbindungszielseitige Netzwerk zu übertragendes Rufsteuerungssignal und zum Übertragen des Rufsteuerungssignals an das verbindungszielseitige Netzwerk.

11. Kommunikationssystem, in dem ein erstes verbindungsaufbauseitiges Netzwerk, das einen Relaisserver (2) nach Anspruch 8 oder 9 aufweist, und ein zweites verbindungszielseitiges Netzwerk, dessen Protokoll sich von demjenigen des ersten Netzwerks unterscheidet, über eine Gatewayvorrichtung (3) nach einem der Ansprüche 5 bis 7 miteinander verbunden sind.

## Revendications

1. Procédé de commande de communication pour une communication via un appareil de passerelle (3) entre un réseau d'origine de connexion et un réseau de terminaison de connexion, dans lequel ledit appareil de passerelle est connecté à un serveur relais (2) présent dans le réseau d'origine, et dans lequel chacun des protocoles dans le réseau d'origine de connexion et le réseau de terminaison de connexion est différent l'un de l'autre, ledit procédé étant **caractérisé par** :
(a) l'association, par ladite passerelle, d'informations d'identification de tarif, reçues via un signal de commande d'appel envoyé depuis ledit serveur relais, qui comportent au moins une catégorie de terminal d'un terminal utilisateur et une zone de tarif définies dans le réseau d'origine de connexion et d'informations d'identification de tarif qui comportent au moins une catégorie de terminal d'un terminal utilisateur et une zone de tarif définies dans le réseau de terminaison de connexion dans une correspondance une à une, et le stockage desdites informations d'identification de tarif associées dans une base de données de conversion (32) de l'appareil de passerelle (3) ;
(b) la conversion, dans ledit appareil de passerelle (3), desdites informations d'identification de tarif incluses dans un signal de commande d'appel reçu en provenance du serveur relais du réseau d'origine de connexion en les informations d'identification de tarif correspondantes du réseau de terminaison de connexion sur la base de la base de données de conversion (32) ;
(c) l'inclusion, au niveau dudit appareil de passerelle (3), des informations d'identification de tarif converties dans un signal de commande d'appel à envoyer au réseau de terminaison de connexion ; et
(d) l'envoi du signal de commande d'appel au réseau de terminaison de connexion depuis ledit appareil de passerelle.

2. Procédé de commande de communication selon la revendication 1, dans lequel ledit réseau d'origine de connexion inclut un serveur relais (2) pour relayer le signal de commande d'appel dans ledit réseau d'origine de connexion, ledit procédé comprenant en outre les étapes suivantes :
(e) l'association d'informations d'adresse utilisateur à la zone de tarif et la catégorie de terminal par rapport au terminal utilisateur (1) dans le réseau d'origine de connexion et le stockage des informations d'adresse utilisateur associées, de la zone de tarif et de la catégorie de terminal dans une base de données d'informations de terminal (22) du serveur relais (2) ;
(f) l'extraction d'informations d'adresse utilisateur source incluses dans le signal de commande d'appel reçu en provenance du terminal utilisateur (1) d'origine d'appel, au niveau du serveur relais (2), la récupération de la base de données d'informations de terminal (22) et l'obtention de la zone de tarif et de la catégorie de terminal correspondant aux informations d'adresse utilisateur source ; et
(g) l'attribution de la zone de tarif obtenue et de la catégorie de terminal en tant qu'informations d'identification de tarif au signal de commande d'appel et la transmission à l'appareil de passerelle (3).

3. Procédé de commande de communication selon la revendication 1 ou la revendication 2, dans lequel lesdites informations d'identification de tarif comportent en outre des informations sur une porteuse, ledit procédé comprenant en outre les étapes suivantes :
(h) l'association des informations sur la porteuse définies dans le réseau d'origine de connexion et des informations sur la porteuse définies dans le réseau de terminaison de connexion dans une correspondance une à une, et le stockage desdites informations d'identification de tarif associées dans la base de données de conversion (32) ;
(i) la conversion, dans ledit appareil de passerelle (3), d'informations sur une porteuse côté origine de connexion incluses dans le signal de commande d'appel reçu en provenance du réseau d'origine de connexion en les informations correspondantes sur la porteuse définies dans le réseau de terminaison de connexion sur la base de la base de données de conversion (32) ;
(j) l'inclusion, au niveau de l'appareil de passerelle (3), des informations converties sur la porteuse côté origine de connexion dans le signal de commande d'appel à envoyer au réseau de terminaison de connexion ; et
(k) l'envoi du signal de commande d'appel au réseau de terminaison de connexion depuis ledit appareil de passerelle (3).

4. Procédé de commande de communication selon la revendication 3, comprenant en outre les étapes suivantes :
(1) la conversion, dans ledit appareil de passerelle (3), d'informations sur la porteuse côté terminaison de connexion incluses dans un signal de réponse de commande d'appel reçu en provenance du réseau de terminaison de connexion en les informations correspondantes sur la porteuse définies dans le réseau d'origine de connexion sur la base de la base de données de conversion (32) ;
(m) l'inclusion, au niveau de l'appareil de passerelle (3) des informations converties sur la porteuse côté terminaison de connexion dans un signal de réponse de commande d'appel à envoyer au réseau d'origine de connexion ; et
(n) l'envoi du signal de réponse de commande d'appel au réseau d'origine de connexion depuis ledit appareil de passerelle (3).

5. Appareil de passerelle (3) prévu entre un réseau d'origine de connexion et un réseau de terminaison de connexion, dans lequel chacun des protocoles dans le réseau d'origine de connexion et le réseau de terminaison de connexion est différent l'un de l'autre, ledit appareil de passerelle étant connecté à un serveur relais (2) du réseau d'origine de connexion, et étant **caractérisé par** :
(a) une base de données de conversion (32) qui est configurée pour associer des informations d'identification de tarif reçues en provenance dudit serveur relais qui comportent au moins une catégorie de terminal d'un terminal utilisateur et une zone de tarif définies dans le réseau d'origine de connexion et des informations d'identification de tarif qui comportent au moins une catégorie de terminal d'un terminal utilisateur et une zone de tarif définies dans le réseau de terminaison de connexion les unes avec les autres dans une correspondance une à une, et pour stocker lesdites informations d'identification de tarif associées ;
(b) une unité de conversion (31) qui est configurée pour convertir lesdites informations d'identification de tarif incluses dans un signal de commande d'appel reçu en provenance du réseau d'origine de connexion en les informations d'identification de tarif correspondantes du réseau de terminaison de connexion sur la base de ladite base de données de conversion (32) ; et
(c) un moyen de commande de communication (33, 34) qui est configuré pour inclure les informations d'identification de tarif converties dans un signal de commande d'appel à envoyer au réseau de terminaison de connexion, et pour envoyer le signal de commande d'appel au réseau de terminaison de connexion.

6. Appareil de passerelle selon la revendication 5, dans lequel lesdites informations d'identification de tarif incluent en outre des informations sur une porteuse,
(d) dans lequel ladite base de données de conversion (32) est en outre configurée pour associer les informations sur la porteuse définies dans le réseau d'origine de connexion et les informations sur la porteuse définies dans le réseau de terminaison de connexion dans une correspondance une à une,
(e) dans lequel ladite unité de conversion (31) est en outre configurée pour convertir des informations sur la porteuse côté origine de connexion incluses dans le signal de commande d'appel reçu en provenance du réseau d'origine de connexion en les informations correspondantes sur la porteuse définies dans le réseau de terminaison de connexion sur la base de la base de données de conversion (32), et
(f) dans lequel ledit moyen de commande de communication (33, 34) est en outre configuré pour inclure les informations converties sur la porteuse dans le signal de commande d'appel à envoyer au réseau de terminaison de connexion, et pour envoyer le signal de commande d'appel au réseau de terminaison de connexion.

7. Appareil de passerelle selon la revendication 6,
(g) dans lequel ladite unité de conversion (31) est en outre configurée pour convertir des informations sur la porteuse côté terminaison de connexion incluses dans un signal de réponse de commande d'appel reçu en provenance du réseau de terminaison de connexion en les informations correspondantes sur la porteuse définies dans le réseau d'origine de connexion sur la base de la base de données de conversion (32), et
(h) dans lequel ledit moyen de commande de communication (33, 34) est en outre configuré pour inclure les informations converties sur la porteuse dans un signal de réponse de commande d'appel à envoyer au réseau d'origine de connexion, et pour envoyer le signal de réponse de commande d'appel au réseau d'origine de connexion.

8. Serveur relais (2) prévu dans un réseau d'origine de connexion pour relayer un signal de commande d'appel dans le réseau d'origine de connexion vers un appareil de passerelle (3) résidant entre le réseau d'origine de connexion et un réseau de terminaison de connexion, ledit serveur relais étant **caractérisé par** :
(a) une base de données d'informations de terminal (22) qui est configurée pour associer des informations d'adresse utilisateur à une zone de tarif et une catégorie de terminal par rapport à un terminal utilisateur (1) dans le réseau d'origine de connexion, et pour stocker les informations d'adresse utilisateur associées, la zone de tarif et la catégorie de terminal ;
(b) un moyen d'attribution d'en-tête (21) qui est configuré pour récupérer la base de données d'informations de terminal (22) sur la base des informations d'adresse utilisateur source incluses dans le signal de commande d'appel reçu en provenance du terminal utilisateur (1) d'origine d'appel lorsque la destination du signal de commande d'appel est un réseau basé sur un protocole différent via l'appareil de passerelle (3), et pour attribuer un en-tête d'identification, qui comporte la zone de tarif et la catégorie de terminal récupérées en tant qu'informations d'identification de tarif sur le tarif, au signal de commande d'appel ; et
(c) un moyen d'envoi (24) pour envoyer le signal de commande d'appel, dans lequel ledit en-tête d'identification est attribué, à l'appareil de passerelle (3),
(d) dans lequel les informations d'identification de tarif incluses dans ledit en-tête d'identification du signal de commande d'appel sont converties en informations d'identification de tarif correspondantes définies dans le réseau de destination du signal de commande d'appel par l'appareil de passerelle (3).

9. Serveur relais selon la revendication 8, dans lequel ledit moyen d'attribution d'en-tête (21) est configuré pour attribuer un autre en-tête d'identification qui comporte des informations sur la porteuse côté origine de connexion, et les informations sur la porteuse côté origine de connexion sont converties en informations correspondantes sur la porteuse définies dans le réseau de destination du signal de commande d'appel par l'appareil de passerelle.

10. Support de stockage pour stocker un programme d'un appareil de passerelle (3), qui est prévu entre un réseau d'origine de connexion et un réseau de terminaison de connexion, dans lequel chacun de protocoles dans le réseau d'origine de connexion et le réseau de terminaison de connexion est différent l'un de l'autre, et comporte une base de données de conversion (32) qui est configurée pour associer des informations d'identification de tarif qui comportent au moins une catégorie de terminal d'un terminal utilisateur et une zone de tarif définies dans le réseau d'origine de connexion et des informations d'identification de tarif qui comportent au moins une catégorie de terminal d'un terminal utilisateur et une zone de tarif définies dans le réseau de terminaison de connexion les unes avec les autres dans une correspondance une à une, et stocker lesdites informations d'identification de tarif associées, **caractérisé en ce que** :
ledit programme amène un ordinateur dudit appareil de passerelle (3) à exécuter
un processus de conversion pour convertir lesdites informations d'identification de tarif incluses dans un signal de commande d'appel reçu en provenance du réseau d'origine de connexion en les informations d'identification de tarif correspondantes du réseau de terminaison de connexion sur la base de ladite base de données de conversion ; et
un processus de commande de communication pour inclure les informations d'identification de tarif converties dans un signal de commande d'appel à envoyer au réseau de terminaison de connexion, et pour envoyer le signal de commande d'appel au réseau de terminaison de connexion.

11. Système de communication dans lequel un premier réseau d'origine incluant un serveur relais (2) selon la revendication 8 ou 9 et un second réseau de terminaison dont le protocole est différent dudit premier réseau sont connectés l'un à l'autre via un appareil de passerelle (3) selon l'une quelconque des revendications 5 à 7.
